(19) **Europäisches Patentamt**

**European Patent Office**

**Office européen des brevets**

(11) **EP 1 340 959 B1**

(12) **EUROPÄISCHE PATENTSCHRIFT**

(45) Veröffentlichungstag und Bekanntmachung des Hinweises auf die Patenterteilung:
**02.08.2006  Patentblatt 2006/31**

(51) Int Cl.:
***G01B 9/02*** *(2006.01)*

(21) Anmeldenummer: **02021952.3**

(22) Anmeldetag: **30.09.2002**

(54) **Interferometrisches Messverfahren und Vorrichtung**

Interferometric measuring method and apparatus

Méthode et appareil de mesure interférométrique

(84) Benannte Vertragsstaaten:
**DE ES FR GB IT**

(30) Priorität: **01.03.2002  DE 10204133**

(43) Veröffentlichungstag der Anmeldung:
**03.09.2003  Patentblatt 2003/36**

(73) Patentinhaber: **ROBERT BOSCH GMBH**
**70442 Stuttgart (DE)**

(72) Erfinder:
- **Drabarek, Pawel**
  **75233 Tiefenbronn (DE)**
- **Streibl, Norbert**
  **71229 Leonberg (DE)**

(56) Entgegenhaltungen:
**DE-A- 19 708 163**  **DE-A- 19 808 273**
**DE-A- 19 955 268**  **FR-A- 2 753 276**
**US-A- 4 830 486**  **US-A- 5 293 215**

**Beschreibung**

Die Erfindung bezieht sich auf ein interfereometrisches Messverfahren zum Erfassen der Form oder des Abstandes von Oberflächen, bei dem Licht erzeugt, hinsichtlich seiner Frequenz moduliert, zum einen auf die Oberfläche geführt und zum andern einer Referenzfläche zugeführt und zur Interferenz gebracht und zu einem Photodetektor geführt wird und zum Erfassen des jeweiligen Abstandes eine Phase des Photodetektorsignals ausgewertet wird, sowie auf eine interferometrische Messvorrichtung zur Durchführung des Verfahrens.

Stand der Technik

Ein derartiges interferometrisches Messverfahren sowie eine Messvorrichtung sind in der DE 198 08 273 A1 angegeben. Bei diesem bekannten, auf dem Prinzip der Heterodyntechnik beruhenden interferometrischen Messverfahren wird mittels eines akustooptischen Modulators die Lichtfrequenz mit einer Heterodynfrequenz zum Erleichtern der Auswertung verschoben und der Abstand bzw. die Form der Oberfläche durch Auswerten der Phasendifferenz ermittelt. Dabei werden die Phasendifferenzen gleichzeitig in Lichtanteilen des von einer kurzkohärenten Lichtquelle erhaltenen und mittels einer Strahlzerlegungseinheit in verschiedene Wellenlängenbereiche aufgeteilten Lichts, das mittels einer Photodetektoranordnung (Photodetektorarray) erfasst wird, gleichzeitig unter Zugrundelegung der jeweiligen Phasendifferenz ausgewertet. Der Eindeutigkeitsbereich ist bei Betrachtung der Phasendifferenz bei Licht nur einer Wellenlänge auf eine Abstandsänderung zwischen zwei Messpunkten von kleiner als die Hälfte der entsprechenden Wellenlänge eingeschränkt. Aus wenigstens zwei unterschiedlichen Wellenlängen hingegen lässt sich, wie an sich bekannt, eine synthetische Wellenlänge $\Lambda = \lambda_1 \cdot \lambda_2 / (\lambda_2 - \lambda_1)$ bilden, die einen entsprechend größeren Eindeutigkeitsbereich ergibt, in dem eine entsprechend gröbere Messung eindeutig durchführbar ist. Der vergrößerte Eindeutigkeitsbereich ist allerdings mit Mehraufwand verbunden.

In der US 5,293,215 ist eine interferometrische Messvorrichtung vorgeschlagen, die ebenfalls auf dem Konzept der Mehrwellenlängen-Heterodyn-Interferometrie beruht, wobei eine frequenzmodulierte Lichterzeugungseinrichtung mit mehreren frequenzmodulierten Lasern als Lichtquellen für die verschiedenen Wellenlängen verwendet wird.

Die FR-A 2 753 276 zeigt ein Verfahren und eine Vorrichtung zum interferometrischen Vermessen von Oberflächen mittels Heterodyntechnik, wobei die Lichtfrequenz eines Lasers variiert wird. Dabei handelt es sich an sich um die übliche Heterodyntechnik mit der Auswertung auf der Grundlage nur einer gemessenen Phasendifferenz. Die Besonderheit liegt dabei in dem Aufbau der Interferometeranordnung mit einem Mess- und einem Referenzinterferometer, um von der genauen Regelung und definierten Änderung der Laser-Lichtfrequenz unabhängig zu werden.

Auch die US-A 4,830,486 zeigt ein interferometrisches Messverfahren und eine entsprechende Vorrichtung zum Messen von Oberflächenrauhigkeiten unter Auswertung der Phasendifferenz. Auch hierbei wird eine Laser-Lichtfrequenz variiert, wobei ebenfalls eine Besonderheit darin besteht, dass ein Referenzinterferometer benutzt wird.

Weitere interferometrische Messverfahren und Messvorrichtungen sind in der DE 197 08 163 A und der DE 199 55 268 A offenbart.

In der US 5,883,715 ist ein Interferometer mit frequenzmodulierter Lichtquelle für ein Vibrometer vorgeschlagen.

Der Erfindung liegt die Aufgabe zugrunde, ein interferometrisches Messverfahren bzw. eine interferometrische Messvorrichtung zu schaffen, die bei vereinfachtem Aufbau eine hohe Auflösung und einen relativ großen Messbereich ermöglichen.

Vorteile der Erfindung

Diese Aufgabe wird mit den Merkmalen der Ansprüche 1 bzw. 3 gelöst.

Durch die Betrachtung der Lichtanteile mit den verschiedenen Wellenlängen zu jeweils unterschiedlichen Zeitpunkten in der näher angegebenen Weise wird es ermöglicht, die Oberflächenmessung ohne zusätzliche Strahlzerlegungseinheit und entsprechend aufwändige Photodetektoranordnung mit daran angepasster nachgeschalteter Auswerteeinrichtung durchzuführen. Bei dadurch einfach ausgebildeter optischer Messanordnung braucht lediglich die Auswerteelektronik zum Betrachten der Phasendifferenzen bei den unterschiedlichen Zeiten mit den jeweils zugehörigen unterschiedlichen Wellenlängen ausgelegt zu werden. Die Auswertung in der Auswerteelektronik bzw. Auswerteeinheit kann dabei beispielsweise mittels entsprechender Software und Programmierung erfolgen.

Die Messvorrichtung ist für die Messung einschließlich der Auswertung entsprechend in der Weise ausgelegt, dass eine in ihrer Lichtfrequenz modulierbare und dazu an einen Modulator angeschlossene Lichtquelle vorgesehen ist, deren Licht über einen Strahlteiler in eine Referenzwelle und eine einer Oberfläche eines Messobjekts zuzuführende Messwelle aufgeteilt wird, die zur Interferenz gebracht werden und dass zur Aufnahme des von den interferierenden Lichtwellen gebildeten und eine Intensitätsmodulation aufweisenden Lichts und zum Erzeugen eines entsprechenden elektrischen Signals ein Photodetektor vorgesehen ist, dem eine Auswerteelektronik zur Auswertung der elektrischen Signale nach geschaltet ist. Die Ausbildung dieser Auswerteelektronik ist in den Teilen a) -c) des Anspruchs 3 spezifiziert.

Eine für die Durchführung des Verfahrens und einen einfachen und robusten Aufbau vorteilhafte Ausgestaltung besteht darin, dass das Licht mit den Lichtanteilen der unterschiedlichen Wellenlängen durch an sich bekannte Frequenzmodulation einer Lichtquelle gewonnen wird und das mit dem Photodetektor erhaltene elektrische Signal während des Auftretens der zu den verschiedenen Wellenlängen gehörenden Lichtfrequenzen ausgewertet wird.

Das Verfahren lässt sich bei einfacher Ausbildung der Auswerteeinheit auf einfache Weise dadurch ausführen, dass zu einem Zeitpunkt entsprechend einer Wellenlänge eine Phasendifferenz bestimmt und eine Feinmessung auf der Oberfläche gemäß dem Zusammenhang $\Delta L = \Delta \rho_1 \cdot \lambda_1 \ / \ (4\pi)$ durchgeführt wird, dass zu einem anderen Zeitpunkt entsprechend einer unterschiedlichen Wellenlänge eine weitere Phasendifferenz bestimmt wird und dass mit der synthetischen Wellenlänge $\Lambda = (\lambda_1 \cdot \lambda_2 \ / \ (\lambda_2 - \lambda_1)$ eine Grobmesung auf der Oberfläche gemäß dem Zusammenhang $\Delta L = (\Delta \varphi_1 - \Delta \varphi_2) \cdot \Lambda / (4\pi)$ durchgeführt wird.

Eine weitere vorteilhafte Maßnahme besteht darin, dass zum Wählen der Zeitpunkte die Auswerteelektronik mit dem Modulator in Signalverbindung steht.

Zeichnung

Die Erfindung wird nachfolgend anhand eines Ausführungsbeispiels unter Bezugnahme auf die Zeichnungen näher erläutert. Es zeigen:

Fig. 1    eine schematische Darstellung des Aufbaus einer interferometrischen Messvorrichtung,

Fig. 2    den Verlauf eines bei einer Messvorrichtung nach Fig. 1 erhaltenen elektrischen Signals bei einer linearen Frequenzmodulation der Lichtquelle bei zwei verschiedenen Abständen einer zu vermessenden Oberfläche und

Fig. 3    den Verlauf der Lichtfreqeunz der Lichtquelle nach Fig. 1 über der Zeit bei Ansteuerung mit dem Modulator.

Ausführungsbeispiel

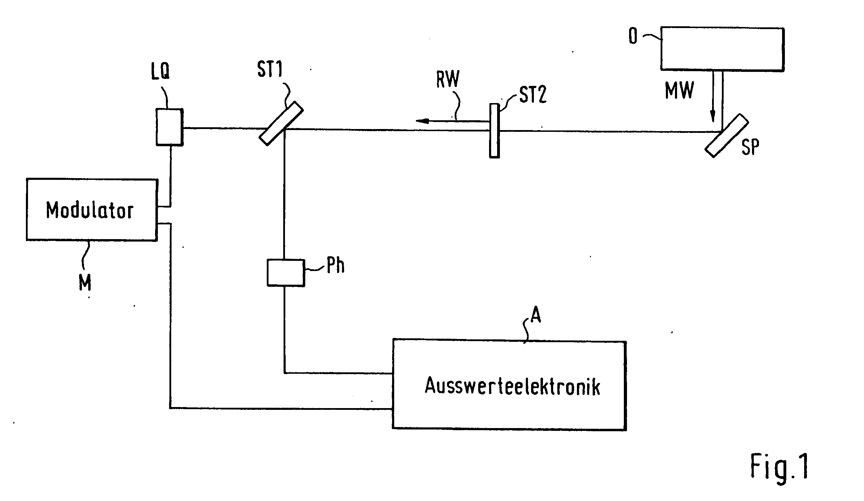

Eine in Fig. 1 gezeigte interferometrische Messvorrichtung in Form eines frequenzmodulierten Mehrwellenlängen-Heterodyn-Interferometers weist eine an einen Modulator M zur elektrischen Ansteuerung angeschlossene Lichtquelle LQ auf, deren Licht über einen ersten Strahlteiler ST1 auf eine Referenzfläche in Form eines weiteren Strahlteilers ST2 geführt und dort in eine zurücklaufende Referenzwelle RW und eine zur Oberfläche eines Messobjekts O über einen Umlenkspiegel SP weiterlaufende Messwelle MW aufgeteilt wird. Die Referenzwelle RW und die zurücklaufende Messwelle MW interferieren und werden von dem ersten Strahlteiler ST1 auf einen Photodetektor Ph geführt, der das interferierende und dadurch intensitätsmodulierte Licht in entsprechende elektrische Signale umwandelt und einer Auswerteelektronik A zuführt, die außerdem mit dem Modulator M in Signalverbindung steht.

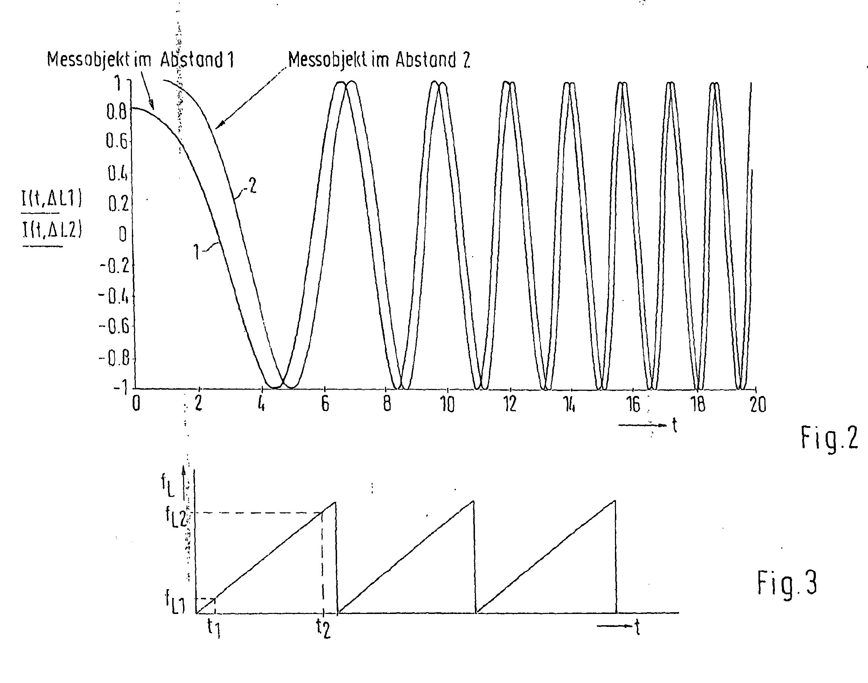

Die Lichtfrequenz $f_L$ der Lichtquelle LQ, z.B. einer Laserdiode, wird von dem Modulator M in ihrer Frequenz z.B. linear verschoben, wie Fig. 3 schematisch wiedergibt. Der von der Lichtquelle ausgesandte, in der Frequenz modulierte Lichtstrahl, der über den ersten Strahlteiler ST1 in die Anordnung eingekoppelt und anschließend in die Referenzwelle RW und die Messwelle MW aufgeteilt wird, erfährt aufgrund des geometrischen Wegunterschiedes der Referenzwelle RW und der Messwelle MW einen Laufzeitunterschied. Aufgrund der Frequenzmodulation und des Laufzeitunterschiedes entsteht eine unterschiedliche Phasenmodulation der beiden interferierenden Lichtwellen, wodurch sich eine Intern-' sitätsmodulation des Lichts an dem Photodetektor Ph ergibt. Die Intensitätsmodulation wird in dem Photodetektor Ph in das elektrische Signal umgewandelt und in Bezug auf das Modulatorsignal ausgewertet, um eine definierte zeitliche Beziehung zwischen dem Modulatorsignal und der Auswertung sicher zu stellen.

Ein Verlauf des von dem Photodetektor Ph erzeugten elektrischen Signals für eine lineare Frequenzmodulation, wie sie beispielhaft in Fig. 3 gezeigt ist, und zwei unterschiedliche Abstände der Oberfläche des Messobjekts O ist in Fig. 2 dargestellt. Durch die Ver-messung der Phase $\Delta \varphi_1$, z.B. eines Sinusdurchgangs, in Beziehung zu dem Modulationssignal kann die Ab-standsänderung $\Delta L$ genau vermessen werden nach der Beziehung

$$\Delta L \ = \ \Delta \varphi_1 \cdot \lambda_1 \ / \ (4 \cdot \pi),$$

wobei $\lambda_1$ die Lichtwellenlänge bei einer entsprechenden Lichtfrequenz $f_{L1}$ zu einem Zeitpunkt $t_1$ der Messung angibt, wie in Fig. 3 veranschaulicht.

Die Messung ist eindeutig, wenn der Abstandsunterschied zwischen zwei Messpunkten kleiner als $\lambda_1$ / 2 ist. Die Erweiterung des Eindeutigkeitsbereichs des Interferometers wird durch eine zweite Messung mit dem elektrischen Signal erreicht, indem, wie in Fig. 3 ebenfalls dargestellt, eine zusätzliche Phasenmessung zu einem späteren Zeitpunkt $t_2$ vorliegend innerhalb des gleichen Zyklus der Frequenzverschiebung (Rampe in Fig. 3) vorgenommen wird. Zu dem späteren Zeitpunkt $t_2$ wird, auf-grund der Modulation der Lichtfrequenz $f_L$ und damit der Lichtwellenlänge $\lambda$, die Phase mit unterschiedlicher Wel-lenlänge $\lambda_2$ gemäß der Beziehung

$$\Delta \varphi_2 \ = \ \Delta L \cdot 4 \cdot \pi \ / \ \lambda_2$$

aus den beiden unterschiedlichen Wellenlängen $\lambda_1$, und $\lambda_2$ gewonnen. Die Wellenlängen $\lambda_1$, $\lambda_2$ können z.B. in-

nerhalb eines Messzyklus deutlich unterschieden werden, wenn die beiden entsprechenden Zeitpunkte $t_1$ und $t_2$ in der Nähe des Beginns beziehungsweise des Endes der Frequenzverschiebung liegen. Eine synthetische Wellenlänge $\Lambda = \lambda_1 \cdot \lambda_2 / (\lambda_2 - \lambda_1)$ kann dann in an sich bekannter Weise gewonnen werden. Unter Zugrundelegung der synthetischen Wellenlänge $\Lambda$ kann die Abstandsänderung mit kleinerer Auflösung aus den Phasenmessungen zu den Zeitpunkten (eigentlich kurzen Zeitabschnitten) $t_1$ und $t_2$ ermittelt werden. Diese Messung ist eindeutig, wenn die Abstandsänderung zwischen zwei Messpunkten kleiner als die Hälfte der synthetischen Wellenlänge $\Lambda$ ist. Beispielsweise kann die Wellenlängendifferenz $\lambda_2 - \lambda_1$ im Vergleich zu dem Produkt der beiden Wellenlängen so gewählt werden, dass die synthetische Wellenlänge $\Lambda$ 100 $\mu$m beträgt.

Durch die Kombination der genauen Messung (Feinmessung) und der Messung mit kleiner Auflösung (Grobmessung) kann eine-hochauftösende Messung in einem großen Eindeutigkeitsbereich durchgeführt werden. Die Phasendifferenzen $\Delta\varphi_1$ und $\Delta\varphi_2$ können in an sich bekannter Weise mittels der Auswerteelektronik A ermittelt werden, wobei die Ermittlung jedoch zeitlich aufeinanderfolgend zu den Zeitpunkten $t_1$ und $t_2$ erfolgt und für die Grobmessung die zugeordneten unterschiedlichen Wellenlängen $\lambda_1$ und $\lambda_2$ zugrundegelegt werden. Die Triggerung der Messungen erfolgt mit Hilfe des Modulatorsignals.

Aufgrund der zeitlich aufeinanderfolgenden Messungen bei den durch die Frequenzmodulation der Lichtfrequenz $f_L$ erhaltenen unterschiedlichen Wellenlängen $\lambda_1$ und $\lambda_2$ wird eine im Aufbau einfache optische Messanordnung ohne spektrale Zerlegungseinheit erreicht. Dabei kann auch ein anderer Aufbau der heterodyninterferometrischen Messvorrichtung als in Fig. 1 verwendet werden, wobei z.B. die Referenzwelle RW und die Messwelle MW mit getrennten Messarmen gebildet werden, wie an sich bei Heterodyn-Interferometern bekannt.

Auch kann anstelle eines Heterodyn-Interferometers eine andere Messanordnung mit Auswertung der Phasendifferenz zur Bestimmung des Abstands der Oberfläche gewählt werden, wogegen die Heterodyn-Technik jedoch eine einfachere Auswertung ermöglicht.

**Patentansprüche**

1. Interferometrisches Messverfahren zum Erfassen der Form oder des Abstandes von Oberflächen, bei dem Licht erzeugt, hinsichtlich seiner Frequenz moduliert, zum einen auf die Oberfläche geführt und zum anderen einer Referenzfläche zugeführt und zur Interferenz gebracht und zu einem Photodetektor geführt wird und zum Erfassen des jeweiligen Abstandes eine Phase des Photodetektorsignals (Ph) ausgewertet wird,
wobei die Phase mindestens in zwei unterschiedlichen Zeitpunkten ($t_1$, $t_2$) mit den jeweils aufgrund der Frequenzmodulation zugehörigen Wellenlängen $\lambda_1$, $\lambda_2$ gemessen und der Auswertung zugeführt wird, wobei zu einem Zeitpunkt($t_1$) entsprechend einer Wellenlänge $\lambda_1$ eine Phasendifferenz $\Delta\varphi_1$ bestimmt und eine Feinmessung gemäß dem Zusammenhang

$$\Delta L = \Delta\varphi_1 \cdot \lambda_1 / (4\pi)$$

durchgeführt wird, worin $\Delta L$ die Abstandsänderung auf der Oberfläche bedeutet,
wobei zu einem anderen Zeitpunkt($t_2$)entsprechend einer unterschiedlichen Wellenlänge $\lambda_2$ eine weitere Phasendifferenz $\Delta\varphi_2$ bestimmt wird und
wobei mit der synthetischen Wellenlänge

$$\Lambda = \lambda_1 \cdot \lambda_2 / (\lambda_2 - \lambda_1)$$

eine Grobmessung auf der Oberfläche gemäß dem Zusammenhang

$$\Delta L = (\Delta\varphi_1 - \Delta\varphi_2) \cdot \Lambda / (4\pi)$$

durchgeführt wird.

2. Interfervmetrisches Messverfahren nach Anspruch 1,
**dadurch gekennzeichnet,**
**dass** die Phase des Photodetektorsignals in Bezug auf die Frequenz des Modulationssignals der Lichtquelle gewonnen wird.

3. Interferometrische Messvorrichtung zur Durchführung des Verfahrens nach einem der vorhergehenden Ansprüche,die in der Weise aufgebaut ist,

- **dass** eine in ihrer Frequenz ($f_L$) modulierbare und dazu an einen Modulator (M) angeschlossene Lichtquelle (LQ) vorgesehen ist, deren Licht über einen Strahlteiler (ST2) in eine Referenzwelle (RW) und eine einer Oberfläche eines Messobjektes (O) zuzuführende Messwelle (MW) aufgeteilt wird, die zur Interferenz gebracht werden und
- dass zur Aufnahme des Lichts, das von den interferierenden Lichtwellen gebildet ist und eine Intensitätsmodulation aufweist, und zum zeugen eines entsprechenden elektrischen Signals ein Photodetektor (Ph) vorgesehen ist, dem eine Auswerteelektronik (A) nachgeschattet ist, welche zur Auswertung der elektrischen Signale in der Weise ausgebildet ist,

a) dass die Phase mindestens in zwei un-

terschiedlichen Zeitpunkten ($t_1$, $t_2$) mit den jeweils aufgrund der Frequenzmodulation zugehörigen Wellenlängen $\lambda_1$, $\lambda_2$ gemessen und der Auswertung zugeführt wird, wobei zu einem Zeitpunkt ($t_1$) entsprechend einer Wellenlänge $\lambda_1$ eine Phasendifferenz $\Delta\varphi_1$ bestimmt und eine Feinmessung gemäß dem Zusammenhang

$$\Delta L = \Delta\varphi_1 \cdot \lambda_1 / (4\pi)$$

durchgeführt wird, worin $\Delta L$ die Abstandsändenrng auf der Oberfläche bedeutet,
b) dass zu einem anderen Zeitpunkt ($t_2$) entsprechend einer unterschiedlichen Wellenlänge $\lambda_2$ eine weitere Phasendifferenz $\Delta\varphi_2$ bestimmt wird und
c) dass eine synthetische Wellenlänge

$$\Lambda = \lambda_1 \cdot \lambda_2 / (\lambda_2 - \lambda_1)$$

gebildet und mit dieser eine Grobmessung auf der Oberfläche gemäß dem Zusammenhang

$$\Delta L = (\Delta\varphi_1 - \Delta\varphi_2) \cdot \Lambda / (4\pi)$$

ausgeführt wird.

4. Messvorrichtung nach Anspruch 3, **dadurch gekennzeichnet, dass** zum Wählen der Zeitpunkte ($t_1$, $t_2$) die Auswerteelektronik (A) mit dem Modulator (M) in Signalverbindung steht.

**Claims**

1. Interferometric measuring method for detecting the shape of or the distance from surfaces, in the case of which light is generated, modulated with regard to its frequency, firstly guided onto the surface and secondly fed to a reference surface and caused to interfere and is guided to a photodetector, and a phase of the photodetector signal (Ph) is evaluated in order to detect the respective distance, in which the phase is measured at at least two different instants ($t_1$, $t_2$) with the wavelengths $\lambda_1$, $\lambda_2$ respectively associated on the basis of the frequency modulation, and is fed to the evaluation, a phase difference $\Delta\phi_1$ being determined at an instant ($t_1$) corresponding to a wavelength $\lambda_1$, and a fine measurement being carried out in accordance with the relationship

$$\Delta L = \Delta\phi_1 \cdot \lambda_1 / (4\pi),$$

$\Delta L$ signifying the change in distance on the surface, in which a further phase difference $\Delta\phi_2$ is determined at another instant ($t_2$) corresponding to a different wavelength $\lambda_2$, and
in which a coarse measurement is carried out on the surface in accordance with the relationship

$$\Delta L = (\Delta\phi_1 - \Delta\phi_2) \cdot \Lambda / (4\pi)$$

with the aid of the synthetic wavelength

$$\Lambda = \lambda_1 \cdot \lambda_2 / (\lambda_2 - \lambda_1).$$

2. Interferometric measuring method according to Claim 1, **characterized in that** the phase of the photodetector signal is obtained with reference to the frequency of the modulation signal of the light source.

3. Interferometric measuring apparatus for carrying out the method according to one of the preceding claims, which is designed in such a way

- that there is provided a light source (LQ) whose frequency ($f_L$) can be modulated, which is connected to a modulator (M), and whose light is split via a beam splitter (ST2) into a reference wave (RW) and a measuring wave (MW) to be fed to a surface of a measurement object (O), which waves are caused to interfere, and
- that in order to pick up the light which is formed by the interfering light waves and exhibits intensity modulation, and to generate a corresponding electric signal, a photodetector (Ph) is provided downstream of which there is connected an electronic evaluation unit (A) which is designed for evaluating the electric signals in such a way

a) that the phase is measured at at least two different instants ($t_1$, $t_2$) with the wavelengths $\lambda_1$, $\lambda_2$ respectively associated on the basis of the frequency modulation, and is fed to the evaluation, a phase difference $\Delta\phi_1$ being determined at an instant ($t_1$) corresponding to a wavelength $\lambda_1$, and a fine measurement being carried out in accordance with the relationship

$$\Delta L = \Delta\phi_1 \cdot \lambda_1 / (4\pi),$$

$\Delta$L signifying the change in distance on the surface,

b) that a further phase difference $\Delta\phi_2$ is determined at another instant ($t_2$) corresponding to a different wavelength $\lambda_2$, and

c) that a synthetic wavelength

$$\Lambda = \lambda_1 \cdot \lambda_2 / (\lambda_2 - \lambda_1)$$

is formed and is used to execute a coarse measurement on the surface in accordance with the relationship

$$\Delta L = (\Delta\phi_1 - \Delta\phi_2) \cdot \Lambda / (4\pi).$$

**4.** Measuring apparatus according to Claim 3, **characterized in that** the electronic evaluation unit (A) is connected for signalling purposes to the modulator (M) in order to select the instants ($t_1$, $t_2$).

**Revendications**

**1.** Procédé de mesure interférométrique pour détecter la forme ou la distance de surfaces, selon lequel on produit une lumière en modulant sa fréquence, on la guide d'une part sur la surface et on l'achemine d'autre part sur une surface de référence pour être amenée en interférence et guidée vers un photodétecteur, et pour détecter la distance respective, on exploite une phase du signal du photodétecteur (Ph), la phase étant mesurée au moins à deux instants différents ($t_1$, $t_2$) avec les longueurs d'ondes $\lambda_1$, $\lambda_2$ respectives à chaque fois suite à la modulation de fréquence, et on l'achemine vers le système d'exploitation, où,

- à un instant ($t_1$), on définit une différence de phase $\Delta\phi_1$ en fonction d'une longueur d'onde $\lambda_1$ et on réalise une mesure précise suivant la relation :
$\Delta L = \Delta\phi_1 \cdot \lambda_1/(4\pi)$, $\Delta$L étant la modification de distance à la surface,

- à un autre instant ($t_2$), on définit une autre différence de phase $\Delta\phi_2$ en fonction d'une longueur d'onde $\lambda_2$ différente et

- à l'aide de la longueur d'onde synthétique :

$$\Lambda = \lambda_1 \cdot \lambda_2 / (\lambda_2 - \lambda_1),$$

on réalise une mesure grossière sur la surface suivant la relation :

$$\Delta L = (\Delta\phi_1 - \Delta\phi_2) \cdot \Lambda / (4\pi).$$

**2.** Procédé de mesure interférométrique selon la revendication 1,
**caractérisé en ce qu'**
on obtient la phase du signal du photodétecteur en rapport avec la fréquence du signal de modulation de la source lumineuse.

**3.** Appareil de mesure interférométrique pour mettre en oeuvre le procédé selon l'une des revendications précédentes, conçu de sorte que :

- une source lumineuse (LQ) pouvant avoir une fréquence ($f_L$) modulée est raccordée à cet effet à un modulateur (M) et sa lumière est divisée par un séparateur de faisceaux (ST2) en une onde de référence (RW) et une onde de mesure (MW) à acheminer vers une surface d'un objet de mesure (O), cette onde de mesure étant amenée en interférence, et

- un photodétecteur (Ph) permet de recevoir la lumière formée par les ondes lumineuses en interférence avec une modulation d'intensité ainsi que pour produire un signal électrique correspondant et un système électronique d'exploitation (A) raccordé en aval de celui-ci est conçu pour exploiter les signaux électriques, de telle sorte que :

a) on mesure la phase au moins à deux instants différents ($t_1$, $t_2$) avec des longueurs d'ondes $\lambda_1$, $\lambda_2$ respectives à chaque fois suite à la modulation de fréquence, et on l'achemine vers le système d'exploitation, où, à un instant ($t_1$), on définit une différence de phase $\Delta\phi_1$ en fonction d'une longueur d'onde $\lambda_1$ et on réalise une mesure précise suivant la relation :

$$\Delta L = \Delta\phi_1 \cdot \lambda_1 / (4\pi),$$

où $\Delta$L représente la modification de distance sur la surface,

b) à un autre instant ($t_2$), on définit une autre différence de phase $\Delta\phi_2$ en fonction d'une longueur d'onde $\lambda_2$ différente et

c) on forme une longueur d'onde synthétique :

$$\Lambda = \lambda_1 \cdot \lambda_2 / (\lambda_2 - \lambda_1),$$

et on réalise à l'aide de celle-ci une mesure grossière sur la surface suivant la relation :

$$\Delta L = (\Delta\varphi_1 - \Delta\varphi_2) \cdot \Lambda \ / \ (4\pi).$$

4. Appareil de mesure selon la revendication 3, **caractérisé en ce que** pour choisir les instants ($t_1$, $t_2$), le système électronique d'exploitation (A) est relié par des signaux avec le modulateur (M).

EP 1 340 959 B1

Fig.1

EP 1 340 959 B1

Messobjekt im Abstand 1   Messobjekt im Abstand 2

$$\frac{I(t,\Delta L1)}{I(t,\Delta L2)}$$

1
0.8
0.6
0.4
0.2
0
-0.2
-0.4
-0.6
-0.8
-1

2

1

0   2   4   6   8   10   12   14   16   18   20

t

Fig.2

$f_L$

$f_{L2}$

$f_{L1}$

$t_1$   $t_2$

t

Fig.3